# FASCICULE DE BREVET EUROPEEN

(11) **EP 3 068 514 B1**
(45) Date de publication et mention de la délivrance du brevet: **20.12.2017**
(21) Numéro de dépôt: 14796808.5
(22) Date de dépôt: 13.10.2014
(51) Int. Cl.: B01D 35/30, B01D 29/96

(54) **SYSTÈME DE FILTRE POUR UN CIRCUIT HYDRAULIQUE FERME, COMPORTANT UNE COLLERETTE DRESSÉE AU DESSUS DU BOUCHON PERMETTANT SON DÉMONTAGE**
FILTERSYSTEM FÜR EINEN GESCHLOSSENEN HYDRAULIKKREIS MIT EINEM MANSCHETTENSTÄNDER ÜBER DEM STOPFEN FÜR DESSEN DEMONTAGE
FILTER SYSTEM FOR A CLOSED HYDRAULIC CIRCUIT, COMPRISING A COLLAR STANDING UP ABOVE THE STOPPER FOR THE DEMOUNTING THEREOF

(30) Priorité: 13.11.2013 FR 1361081
(43) Date de publication de la demande: 21.09.2016
(73) Titulaire: Technoboost, 75116 Paris (FR)
(72) Inventeur: REBER, Thomas, F-92270 Bois Colombes (FR)
(74) Mandataire: Rosenberg, Muriel Sylvie
(86) Numéro de dépôt international: PCT/FR2014/052591
(87) Numéro de publication internationale: WO 2015/071562

(56) Documents cités:
- DE-A1- 19 707 600
- US-A- 5 298 160

## Description

La présente invention concerne un système de filtre pour un circuit hydraulique, ainsi qu'un procédé de changement de l'élément filtrant pour un circuit hydraulique comprenant un tel système, et un véhicule automobile hybride équipé de ce système de filtre.

Les circuits hydrauliques disposant d'un fluide quelconque appelé par la suite huile, comportent souvent un filtre disposé en série dans la circulation du fluide, comprenant un élément filtrant comme un papier qui filtre en continu l'huile afin de la purifier des particules en suspension. L'élément filtrant peut en particulier être inclus dans une cartouche disposant d'un support comprenant l'élément filtrant, qui facilite les opérations par l'échange de la cartouche complète.

Il est alors généralement prévu d'effectuer régulièrement des opérations de maintenance pour changer le filtre et en disposer un nouveau, afin d'éviter une perte d'efficacité de la filtration et un risque de colmatage qui pourraient endommager des éléments du circuit.

Par ailleurs certains circuits hydrauliques fermés fonctionnant sans air, comportent des purgeurs manuels ou automatiques aux points les plus hauts permettant d'éliminer complètement l'air contenu à l'intérieur.

Pour l'échange du filtre de ces circuits fermés, une solution connue consiste à ouvrir un bouchon pour prélever dans le circuit l'ancien filtre et y déposer le nouveau.

Dans ce cas l'ouverture du circuit hydraulique occasionne une entrée d'air dedans, des risques de salissure à l'extérieur, notamment par l'écoulement d'huile venant du filtre largement imprégné qui s'égoutte par la suite, et une certaine perte de fluide.

Il faut alors après le changement du filtre refaire le niveau d'huile pour compenser les pertes, et purger ce circuit. Il faut de plus suivant les cas prévoir un bac de récupération des écoulements extérieurs d'huile, et nettoyer les coulures avec des matériaux absorbants.

Ces différentes opérations nécessitent du temps, et comportent des risques. Le niveau d'huile peut être mal ajusté. La purge peut être incomplète, ou tardive dans le cas d'une purge automatique, avec une certaine circulation de l'huile en attendant que l'air soit expulsé. Ces problèmes entraînent des risques d'endommagement de composants du circuit.

Par ailleurs certains fluides sont corrosifs, entraînant des risques pour les composants exposés, ou un danger pour les opérateurs. De plus le nettoyage des coulures extérieures peut être incomplet, en particulier dans les endroits difficiles d'accès.

Le document US 5 298 160 décrit un système de filtration avec un réservoir placé à l'extrémité supérieure du boîtier de filtration afin d'empêcher toutes pertes de fluide lors du remplacement de l'élément filtrant.

La présente invention a notamment pour but d'éviter ces inconvénients de la technique antérieure.

Elle propose à cet effet un système de filtre pour un circuit hydraulique fermé prévu pour fonctionner sans air, comprenant un élément filtrant contenu dans un bol disposant d'une ouverture supérieure, et un bouchon équipé d'un moyen de purge fermant cette ouverture, caractérisé en ce que le bol comporte une collerette dressée au dessus du bouchon pouvant contenir l'élément filtrant, ou comporte au dessus de ce bouchon des moyens de fixation et d'étanchéité prévus pour recevoir la base d'une collerette amovible du même type, cette collerette permettant par son entrée supérieure un démontage et un retrait complet du bouchon.

Un avantage de ce système de filtre est que la collerette étant disposée sur l'ouverture du bol, on peut facilement dévisser le couvercle accessible par l'entrée de cette collerette, et effectuer les opérations d'échange de l'élément filtrant en laissant l'huile s'écouler dans la collerette, qui redescend obligatoirement dans le circuit grâce à l'étanchéité de la fixation de la base de cette collerette.

On peut de plus facilement refaire un niveau d'huile suffisant et remettre le bouchon avec le moyen de purge ouvert, ce qui permet d'assurer en même temps une purge sans laisser couler de l'huile à l'extérieur, cette huile étant retenue dans la collerette.

On réalise ainsi facilement et rapidement l'échange de l'élément filtrant en limitant les pertes d'huile et le nettoyage. On assure un gain de temps, des économies, et les meilleures conditions de sécurité.

Le système de filtre selon l'invention peut de plus comporter une ou plusieurs des caractéristiques suivantes, qui peuvent être combinées entre elles.

Avantageusement, la collerette étant amovible, le bol comporte au dessus du bouchon une rainure intérieure circulaire débouchant vers le dessus, prévue pour recevoir une partie cylindrique de la base de cette collerette.

Dans ce cas, la rainure intérieure peut recevoir la partie cylindrique avec un serrage ou un vissage.

Avantageusement, le bol comporte à l'intérieur une face transversale supérieure recevant un joint circulaire formant une étanchéité avec le bouchon.

En particulier, le bol peut comporter une nervure annulaire intérieure comprenant la face transversale supérieure.

Avantageusement, le bouchon comporte un joint circulaire d'étanchéité qui reste fixé sur ce bouchon quand il est déposé.

Avantageusement, le bouchon comporte une face inférieure comprenant des pentes qui montent vers un perçage permettant une purge.

Selon un mode de réalisation, le bouchon comporte sur un diamètre un peu inférieur à son contour extérieur, des formes permettant une prise par un outil qui passe dans la collerette.

L'invention a aussi pour objet un procédé de changement de l'élément filtrant pour un système de filtre comprenant l'une quelconque des caractéristiques précédentes, comportant les étapes suivantes, on fixe la collerette sur le bol si elle est amovible, puis on dépose le bouchon et on le retire de la collerette, on extrait l'élément filtrant en le laissant reposer dans cette collerette pour permettre un égouttage de l'huile, puis on le retire pour mettre en place le nouvel élément, on complète si nécessaire le niveau d'huile et on refixe le bouchon en laissant le moyen de purge ouvert, et enfin on referme ce moyen de purge et on enlève la collerette si elle est amovible.

L'invention a de plus pour objet un véhicule automobile hybride disposant d'un système de filtre pour un circuit hydraulique fermé prévu pour fonctionner sans air, utilisé pour la traction de ce véhicule, ce système de filtre comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue éclatée d'un système de filtre selon l'invention, et d'une collerette amovible destinée à s'ajuster dessus ;
- la figure 2 est une vue en coupe axiale de cet ensemble ;
- la figure 3 est une vue en coupe axiale du système de filtre suivant une première variante ;
- la figure 4 est une vue en coupe axiale du système de filtre suivant une deuxième variante ;
- la figure 5 est une vue de dessus de la coupelle assemblée sur le système de filtre ; et
- la figure 6 est une vue d'un bouchon en variante, avec sa clé de manoeuvre.

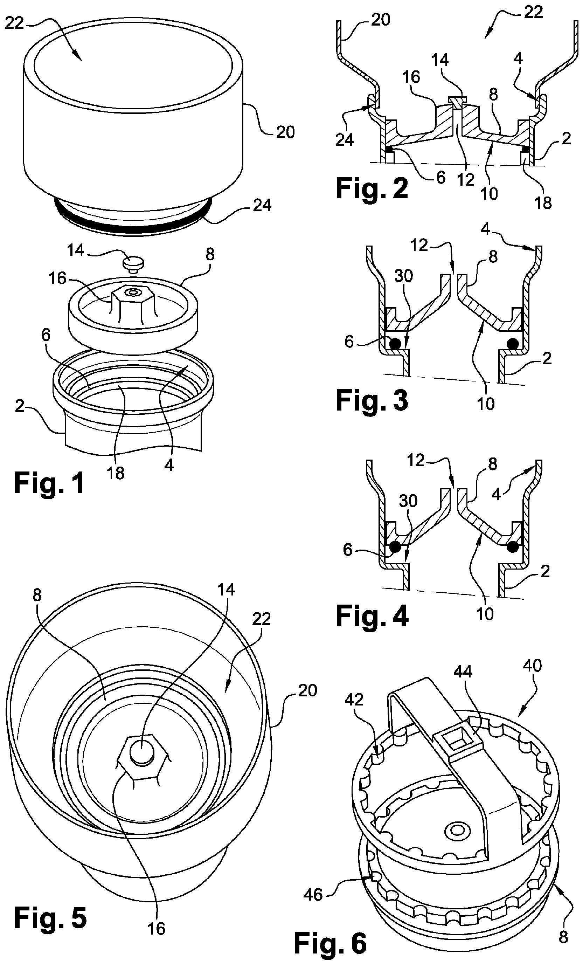

Les figures 1 et 2 présentent un bol circulaire 2 comprenant un logement cylindrique présentant un axe sensiblement vertical, prévu pour recevoir un élément filtrant comme une cartouche.

Le bol 2 dispose sur son contour supérieur d'un bossage tourné radialement vers l'extérieur, qui forme une rainure annulaire intérieure 4 débouchant sur le dessus. Une nervure annulaire intérieure 18 disposée dans la partie cylindrique du bol 2 un peu en dessous de cette rainure 4, comporte sur sa face transversale supérieure un joint d'étanchéité circulaire 6.

Un bouchon 8 venant fermer l'ouverture supérieure du bol 2, comporte un contour extérieur cylindrique disposant d'un filetage venant se visser dans un taraudage correspondant réalisé dans la partie cylindrique de ce bol, au-dessus de la nervure annulaire 18.

Le bouchon 8 est vissé par une clé s'ajustant sur un bossage de forme hexagonale réalisé au centre du bouchon 8 et dépassant vers le haut, la face inférieure 10 de ce bouchon étant serrée sur le joint 6 afin de réaliser une étanchéité qui ferme le circuit d'huile intérieur.

La face inférieure 10 du bouchon 8 présente une forme légèrement conique centrée sur l'axe, comprenant sa partie centrale qui remonte pour se terminer par un perçage axial 12 réalisé au centre du bossage et débouchant au dessus de ce bouchon.

Le perçage axial 12 reçoit une vis de purge 14 vissée dans un taraudage de ce perçage, qui se trouve ainsi au point le plus élevé de cette partie du circuit hydraulique. On peut ainsi après avoir échangé l'élément filtrant à l'intérieur et rempli le bol 2 d'huile jusqu'à un niveau indiqué par un repère, refermer le bouchon 8 en laissant la vis de purge 14 ouverte pour purger en même temps le système de filtre.

Une collerette circulaire 20 forme un bocal comprenant une entrée supérieure 22, qui se resserre à sa base pour présenter une partie cylindrique 24 de faible longueur disposant d'un joint d'étanchéité sur son pourtour.

La partie cylindrique 24 vient s'emboîter avec un léger serrage dans une forme correspondante réalisée au fond de la rainure intérieure 4 du bol 2, de manière à guider cette collerette 20 suivant l'axe de ce bol, et à la maintenir suffisamment pendant l'opération de changement du filtre, tout en assurant une étanchéité.

La collerette 20 comprenant une dimension suffisante pour recevoir le filtre, permet par son entrée supérieure 22 un dévissage et un retrait complet du bouchon 8.

En variante la collerette 20 peut être maintenue sur le bol 2 par d'autres moyens, comprenant par exemple un filetage réalisé sur la partie cylindrique 24 qui vient se visser dans un taraudage correspondant réalisé au fond de la rainure intérieure 4.

La collerette 20 peut être laissée en permanence sur le circuit hydraulique, ou être considérée comme un outillage gardé en réserve qui est fixé sur ce circuit uniquement pour effectuer des opérations de maintenance. En variante la collerette 20 peut être intégrée au bol 2.

La figure 3 présente une variante du bol 2 comprenant sa partie cylindrique intérieure disposant d'un diamètre réduit, de manière à former un épaulement tourné radialement vers l'extérieur, comportant sa face transversale supérieure 30 recevant le joint d'étanchéité circulaire 6.

La figure 4 présente une autre variante du bol 2 similaire à la précédente, le joint d'étanchéité circulaire 6 étant fixé sur la face inférieure 10 du bouchon 8, et prenant appui en fin de serrage sur la face transversale supérieure 30 de l'épaulement. Cette variante facilite le remplacement du joint 6 à chaque ouverture du bouchon 8, qui est plus accessible sur ce bouchon une fois qu'il est démonté.

La figure 5 présente le procédé d'échange du filtre à huile. Si la collerette 20 n'est pas installée en permanence, on la fixe sur le bol 2.

La pression dans le circuit hydraulique fermé doit être mise à la pression atmosphérique par l'ouverture de la vis de purge 14, ou l'ouverture d'un autre moyen disposé dans ce circuit. Dans le cas de l'ouverture de la vis de purge 14 une petite quantité d'huile peut sortir par cette vis, qui reste dans la collerette 20.

Ensuite le bouchon 8 comprenant sa vis de purge 14 déposée, est dévissé en introduisant une clé verticalement par l'ouverture supérieure 22 de la collerette 20, pour accéder à ce bouchon et le tourner. Le bouchon 8 est ensuite sorti par le haut en dehors de la collerette 20.

Puis l'opérateur extrait l'élément filtrant en le saisissant par exemple avec une pince, pour le monter au-dessus du bol 2, et le laisser ensuite reposer dans la collerette 20. Ce temps de repos permet à l'huile imprégnant cet élément de s'égoutter en coulant dans la collerette 20 pour redescendre dans le bol 2, sans risquer de fuir à l'extérieur grâce à l'étanchéité faisant la liaison entre cette collerette et ce bol.

On récupère ainsi après un temps d'écoulement une grande partie de l'huile qui est remise de suite dans le circuit, tout en évitant des coulées à l'extérieur.

L'opérateur retire ensuite l'ancien élément filtrant qui est égoutté, puis met en place le nouveau. Il peut alors si nécessaire compléter le niveau d'huile jusqu'à un repère indiqué dans le bol.

Après avoir si nécessaire changé le joint d'étanchéité 6, l'opérateur descend le bouchon 8 dans la collerette 20 puis le revisse, la vis de purge 14 étant toujours enlevée pour chasser l'air intérieur qui remonte vers le perçage axial 12 grâce à la forme conique de la face inférieure 10 de ce bouchon.

La vis de purge 14 est ensuite revissée, puis l'opérateur peut essuyer sur le bouchon 8 un petit excédent d'huile échappé par cette vis, permettant de garantir qu'il y a assez d'huile dans le circuit pour éviter de laisser de l'air dedans une fois fermé. Enfin l'opérateur enlève la collerette 20 si elle est amovible.

On obtient ainsi de manière simple et efficace un changement d'élément filtrant qui est propre, rapide et économique, et qui permet de plus d'assurer la sécurité du circuit hydraulique en évitant un défaut de purge.

La figure 6 présente en variante un bouchon 8 disposant sur un diamètre un peu inférieur à son contour extérieur, d'une succession de rainures axiales 46 qui permettent l'ajustement de bossages correspondant 42 réalisés dans un anneau circulaire d'une clé de démontage 40.

La clé de démontage 40 comporte une barre transversale comprenant ses extrémités fixées à l'anneau, présentant au milieu un carré d'entraînement 44 destiné à s'ajuster dans une rallonge de clé à douille. Le diamètre extérieur de la clé 40 est prévu pour passer dans la collerette 20 afin d'accéder au bouchon 8.

On obtient ainsi une grande surface de contact entre la clé de démontage 40 et le bouchon, disposée sur un diamètre important, ce qui réduit les pressions. On peut ainsi plus facilement réaliser un bouchon 8 moulé en matière plastique.

Le système de filtre suivant l'invention est particulièrement approprié pour un circuit hydraulique fermé prévu pour fonctionner sans air, utilisé pour la traction d'un véhicule automobile hybride, qui nécessite des opérations de maintenance régulières devant être effectuées de manière sûre et économique par un réseau de réparateur.

## Revendications

1. Système de filtre pour un circuit hydraulique fermé prévu pour fonctionner sans air, comprenant un élément filtrant contenu dans un bol (2) disposant d'une ouverture supérieure, et un bouchon (8) équipé d'un moyen de purge (14) fermant cette ouverture, **caractérisé en ce que** le bol (2) comporte une collerette (20) dressée au-dessus du bouchon (8), ou comporte au-dessus de ce bouchon des moyens de fixation et d'étanchéité (4) prévus pour recevoir la base (24) d'une collerette amovible du même type, cette collerette permettant par son entrée supérieure (22) un démontage et un retrait complet du bouchon, la collerette pouvant contenir l'élément filtrant pour égouttage lorsque celui-ci est extrait du bol, l'huile imprégnant l'élément filtrant s'écoulant dans la collerette pour redescendre dans le bol.

2. Système de filtre selon la revendication 1, **caractérisé en ce que** la collerette (20) étant amovible, le bol (2) comporte au-dessus du bouchon (8) une rainure intérieure (4) débouchant vers le dessus, prévue pour recevoir une partie cylindrique (24) de la base de cette collerette.

3. Système de filtre selon la revendication 2, **caractérisé en ce que** la rainure intérieure (4) reçoit la partie cylindrique (24) avec un serrage ou un vissage.

4. Système de filtre selon l'une quelconque des revendications précédentes, **caractérisé en ce que** le bol (2) comporte à l'intérieur une face transversale supérieure (30) recevant un joint circulaire (6) formant une étanchéité avec le bouchon (8).

5. Système de filtre selon la revendication 4, **caractérisé en ce que** le bol (2) comporte une nervure annulaire intérieure (18) comprenant la face transversale supérieure (30).

6. Système de filtre selon l'une quelconque des revendications précédentes, **caractérisé en ce que** le bouchon (8) comporte un joint circulaire d'étanchéité (6) qui reste fixé sur ce bouchon quand il est déposé.

7. Système de filtre selon l'une quelconque des revendications précédentes, **caractérisé en ce que** le bouchon (8) comporte une face inférieure (10) comprenant des pentes qui montent vers un perçage (12) permettant une purge.

8. Système de filtre selon l'une quelconque des revendications précédentes, **caractérisé en ce que** le bouchon (8) comporte sur un diamètre un peu inférieur à son contour extérieur, des formes permettant une prise par un outil (40) qui passe dans la collerette (20).

9. Procédé de changement de l'élément filtrant pour un système de filtre selon l'une quelconque des revendications précédentes, **caractérisé en ce qu'**on fixe la collerette (20) sur le bol (2) si elle est amovible, puis on dépose le bouchon (8) et on le retire de la collerette (20), on extrait l'élément filtrant en le laissant reposer dans cette collerette pour permettre un égouttage de l'huile, puis on le retire pour mettre en place le nouvel élément, on complète si nécessaire le niveau d'huile et on refixe le bouchon (8) en laissant le moyen de purge (14) ouvert, et enfin on referme ce moyen de purge et on enlève la collerette (20) si elle est amovible.

10. Véhicule automobile hybride disposant d'un système de filtre pour un circuit hydraulique fermé prévu pour fonctionner sans air, utilisé pour la traction de ce véhicule, **caractérisé en ce que** ce système de filtre est réalisé selon l'une quelconque des revendications 1 à 8.

## Patentansprüche

1. Filtersystem für einen geschlossenen hydraulischen Kreislauf, der dazu vorgesehen ist, ohne Luft zu funktionieren, das ein Filterelement umfasst, das in einer Schale (2), die über eine obere Öffnung verfügt, enthalten ist, und einen Stopfen (8), der mit einem Entlüftungsmittel (14), das diese Öffnung verschließt, versehen ist, **dadurch gekennzeichnet, dass** die Schale (2) einen Kragen (20) umfasst, der oberhalb des Stopfens (8) aufgerichtet ist oder unter diesem Stopfen Befestigungs- und Abdichtmittel (4) umfasst, die vorgesehen sind, um die Basis (24) eines abnehmbaren Kragens desselben Typs aufzunehmen, wobei dieser Kragen durch seinen oberen Eingang (22) eine Demontage und ein vollständiges Herausnehmen des Stopfens erlaubt, wobei der Kragen das Filterelement zum Abtropfen aufnehmen kann, wenn dieses aus der Schale genommen wird, wobei das Öl, das das Filterelement tränkt, in dem Kragen abfließt, um wieder in die Schale zu fallen.

2. Filtersystem nach Anspruch 1, **dadurch gekennzeichnet, dass**, da der Kragen (20) abnehmbar ist, die Schale (2) oberhalb des Stopfens (8) eine innere Rille (4) umfasst, die nach oben mündet, die vorgesehen ist, um einen zylindrischen Teil (24) der Basis dieses Kragens aufzunehmen.

3. Filtersystem nach Anspruch 2, **dadurch gekennzeichnet, dass** die innere Rille (4) den zylindrischen Teil (24) mit einem Spannen oder einem Schrauben aufnimmt.

4. Filtersystem nach einem der vorhergehenden Ansprüche, **dadurch gekennzeichnet, dass** die Schale (2) im Inneren eine obere Querseite (30) umfasst, die eine kreisförmige Dichtung (6), die eine Abdichtung mit dem Stopfen (8) bildet, aufnimmt.

5. Filtersystem nach Anspruch 4, **dadurch gekennzeichnet, dass** die Schale (2) eine innere ringförmige Rippe (18) umfasst, die die obere Querseite (30) umfasst.

6. Filtersystem nach einem der vorhergehenden Ansprüche, **dadurch gekennzeichnet, dass** der Stopfen (8) eine kreisförmige Dichtung (6) umfasst, die auf diesem Stopfen befestigt bleibt, wenn er abgenommen wird.

7. Filtersystem nach einem der vorhergehenden Ansprüche, **dadurch gekennzeichnet, dass** der Stopfen (8) eine Unterseite (10) umfasst, die Abschrägungen umfasst, die zu einer Bohrung (12), die eine Entlüftung erlaubt, aufsteigen.

8. Filtersystem nach einem der vorhergehenden Ansprüche, **dadurch gekennzeichnet, dass** der Stopfen (8) auf einem Durchmesser, der leicht geringer ist als seine Außenkontur, Formen umfasst, die ein Ergreifen durch ein Werkzeug (40), das in dem Kragen (20) durchgeht, erlauben.

9. Verfahren zum Wechseln des Filterelements für ein Filtersystem nach einem der vorhergehenden Ansprüche, **dadurch gekennzeichnet, dass** man den Kragen (20) auf der Schale (2), falls sie abnehmbar ist, befestigt, man dann den Stopfen (8) abnimmt und von dem Kragen (20) entfernt, man das Filterelement extrahiert und es dabei in diesem Kragen aufliegen lässt, um ein Abtropfen des Öls zu erlauben, man es dann entfernt, um das neue Element anzubringen, man bei Bedarf den Ölfüllstand nachfüllt und man den Stopfen (8) wieder befestigt, wobei man das Entlüftungsmittel (14) offen lässt, und man dieses Entlüftungsmittel schließlich wieder schließt und den Kragen (20), falls er abnehmbar ist, abnimmt.

10. Hybridkraftfahrzeug, das über ein Filtersystem für einen geschlossenen hydraulischen Kreislauf verfügt, der vorgesehen ist, um ohne Luft zu funktionieren, der für die Traktion dieses Fahrzeugs verwendet wird, **dadurch gekennzeichnet, dass** dieses Filtersystem nach einem der Ansprüche 1 bis 8 hergestellt ist.

## Claims

1. A filter system for a closed hydraulic circuit intended to operate without air, comprising a filtering element contained in a bowl (2) having an upper opening, and a plug (8), provided with a purging means (14), closing this opening, **characterised in that** the bowl (2) comprises a collar (20) standing up above the plug (8), or comprises above this plug fixing and sealing means (4) intended to receive the base (24) of a removable collar of the same type, this collar permitting, by way of its upper inlet (22), dismounting and complete withdrawal of the plug, the collar being able to contain the filtering element for dripping when the latter is extracted from the bowl, the oil impregnating the filtering element draining off in the collar so as to descend into the bowl.

2. The filter system according to claim 1, **characterised in that**, since the collar (20) is removable, the bowl (2) comprises above the plug (8) an internal groove (4) opening towards the top, intended to receive a cylindrical part (24) of the base of this collar.

3. The filter system according to claim 2, **characterised in that** the internal groove (4) receives the cylindrical part (24) with clamping or screwing.

4. The filter system according to any one of the preceding claims, **characterised in that** the bowl (2) comprises in the interior an upper transverse face (30) receiving a circular gasket (6) forming a seal with the plug (8).

5. The filter system according to claim 4, **characterised in that** the bowl (2) comprises an internal annular rib (18) comprising the upper transverse face (30).

6. The filter system according to any one of the preceding claims, **characterised in that** the plug (8) comprises a circular sealing gasket (6) which remains fixed on this plug when it is put in place.

7. The filter system according to any one of the preceding claims, **characterised in that** the plug (8) comprises a lower face (10) containing inclines which rise towards a hole (12) permitting purging.

8. The filter system according to any one of the preceding claims, **characterised in that** the plug (8) comprises, on a diameter slightly less than its outer contour, shapes permitting gripping by a tool (40) which passes into the collar (20).

9. A method for changing the filtering element for a filter system according to any one of the preceding claims, **characterised in that** the collar (20) is fixed on the bowl (2) if it is removable, then the plug (8) is put in place and it is withdrawn from the collar (20), the filter element is extracted whilst allowing it to remain in this collar to permit dripping of the oil, then it is withdrawn to allow the new element to be put in place, the oil level is topped up if necessary and the plug (8) is fixed in place again leaving the purging means (14) open, and finally this purging means is closed and the collar (20) is removed if it is removable.

10. A hybrid motor vehicle comprising a filter system for a closed hydraulic circuit intended to operate with air, used for the traction of this vehicle, **characterised in that** this filter system is implemented according to any one of claims 1 to 8.
